# EUROPEAN PATENT SPECIFICATION

(11) **EP 2 647 534 B1**
(45) Date of publication and mention of the grant of the patent: **15.10.2014**
(21) Application number: 13003378.0
(22) Date of filing: 16.10.2009
(51) Int. Cl.: B60T 8/26, B60T 8/32, B62L 3/08

(54) **Braking system for motorcycle**
Bremssystem für ein Motorrad
Système de freinage pour motocyclette

(43) Date of publication of application: 09.10.2013
(62) Divisional of application: 09173235.4
(73) Proprietor: Yamaha Hatsudoki Kabushiki Kaisha, Shizuoka-ken Shizuoka 438-8501 (JP); Continental Automotive Corporation, Yokohama-city Kanagawa 221-0031 (JP); Continental Teves AG & Co. oHG, 60488 Frankfurt (DE)
(72) Inventor: Kajiwara, Kunio, Iwata-shi, Shizuoka 438-8501 (JP); Watanabe, Takahiro, Iwata-shi, Shizuoka 438-8501 (JP); Kusano, Taishi, Asahi-city ,Chiba 289-2505 (JP); Takanori, Uchida, Yokohama-city, Kanagawa 221-0031 (JP); Kremer, Michael, 64846 Groß-Zimmern (DE); Meixner, Michael, 60320 Frankfurt am Main (DE)
(74) Representative: Grünecker, Kinkeldey, Stockmair & Schwanhäusser

(56) References cited:
- EP-A2- 0 524 821
- EP-A2- 1 277 635
- WO-A1-2004/022395
- WO-A1-2007/068702
- DE-A1- 2 921 626

## Description

The present invention relates to a braking system for a motorcycle according to the preamble of independent claim 1. More specifically, the invention relates to a braking system for a motorcycle including at least two braking mechanisms and a association mechanism which drives one of the braking mechanisms when the other braking mechanism is operated. Such a braking system for a motorcycle can be taken from the prior art document WO 2004/022395 A1.

In a motorcycle such as a motorcycle, it is regarded as being preferable that a front wheel brake operation member and a rear wheel brake operation member are simultaneously operated to equally generate braking forces for a front wheel and a rear wheel.

In recent years, to make the rider's braking operation easier, a braking system having a association mechanism is proposed. Here, the association mechanism is constituted such that when one of a front wheel braking force generating mechanism and a rear wheel braking force generating mechanism is operated, the association mechanism drives the other braking force generating mechanism. In a braking system having the association mechanism, if a rider operates the front wheel brake operation member or the rear wheel brake operation member, braking forces are generated in both the front wheel braking force generating mechanism and the rear wheel braking force generating mechanism. Therefore, in the motorcycle having the braking system with the association mechanism, appropriate braking forces can be supplied to the motorcycle with a simple operation only.

The braking system with the association mechanism has a serious problem as to how a balance between a front wheel braking force generated in the front wheel braking force generating mechanism and a rear wheel braking force generated in the rear wheel braking force generating mechanism should be set. The braking system has also a problem as to how the total magnitude of the braking forces acting on the motorcycle should be set.

For example, the following WO 2004/022395 A1 discloses a braking system capable of preferably distributing braking forces which are balance between the front wheel braking force and the rear wheel braking force both in a case where deceleration of the vehicle is small and in a case where the deceleration of the vehicle is great.

According to the braking system disclosed in WO 2004/022395 A1, when a reference deceleration which is analogous to the actual vehicle deceleration is smaller than a predetermined deceleration, the front wheel brake and the rear wheel brake are driven such that a fixed braking force distribution is achieved. When, on the other hand, the reference deceleration becomes greater than the predetermined deceleration, the front wheel brake and the rear wheel brake are driven such that braking force distribution suitable for the reference deceleration is achieved. Therefore, WO 2004/022395 A1 describes that suitable braking force distribution can be achieved not only when the reference deceleration is small, but also when the reference deceleration is great.

Further, WO 2004/022395 A1 points out that ideal braking force distribution is changed depending upon a carrying load. In view of this fact, WO 2004/022395 A1 discloses that the braking force distribution is changed in accordance with a carrying weight. More specifically, in the braking system disclosed in WO 2004/022395 A1, a lock state of the front wheel and the rear wheel is detected, thereby evaluating a carrying load state, and the braking force distribution is controlled in accordance with the lock state.

As described above, according to the braking system disclosed in WO 2004/022395 A1, a carrying load is determined in accordance with the lock state of the front wheel and the rear wheel, and the braking force distribution is controlled in accordance with the determined carrying load. For this reason, the carrying load cannot be determined unless the front wheel or the rear wheel is brought into the lock state. Thus, the braking force distribution suitable for the carrying load cannot be realized unless the front wheel or the rear wheel is brought into the lock state. Thus, according to the braking system disclosed in WO 2004/022395 A1, in a state where a braking force acting on the front wheel or the rear wheel is small and the front wheel or the rear wheel is not locked, the braking force distribution cannot be distribution suitable for the carrying load.

The motorcycle using the braking force disclosed in WO 2004/022395 A1 has a problem that a total magnitude of the braking forces acting on the motorcycle cannot be optimized in accordance with the carrying weight.

The present invention has been accomplished in view of such circumstances, and it is an object of the invention to provide a braking system for a motorcycle capable of supplying a braking force suitable for a carrying weight to a motorcycle also in a state where a front wheel and a rear wheel are not locked.

According to the present invention said object is solved by a braking system for a motorcycle having the features of independent claim 1. Preferred embodiments are laid down in the dependent claims.

A braking system for a motorcycle according to a preferred embodiment includes a first hydraulic pressure supply mechanism, a first braking force generating mechanism, a first operation member, a second hydraulic pressure supply mechanism, a second braking force generating mechanism, a second operation member, a hydraulic pressure sensor, a association mechanism, a G sensor and a control unit. The first hydraulic pressure supply mechanism supplies hydraulic pressure. The first braking force generating mechanism is supplied with hydraulic pressure from the first hydraulic pressure supply mechanism, thereby generating a braking force. The first operation member is for operating the first braking force generating mechanism. The second hydraulic pressure supply mechanism supplies hydraulic pressure. The second braking force generating mechanism is supplied with hydraulic pressure from the second hydraulic pressure supply mechanism, thereby generating a braking force. The second operation member is for operating the second braking force generating mechanism. The hydraulic pressure sensor detects hydraulic pressure supplied to the second braking force generating mechanism. The association mechanism supplies hydraulic pressure to the first braking force generating mechanism when the second operation member is operated. The G sensor detects a weight of the motorcycle. The control unit controls the association mechanism. The control unit adjusts and controls to increase hydraulic pressure supplied to the first braking force generating mechanism by the association mechanism when the weight of the motorcycle is greater than a predetermined weight.

According to the braking system for the motorcycle, a weight of the motorcycle is directly detected by the G sensor, and a magnitude of hydraulic pressure supplied to the first braking force generating mechanism by the association mechanism is controlled based on the detection result. Therefore, it is possible to obtain a braking force of the motorcycle suitable for the carrying weight even when the front wheel or the rear wheel of the motorcycle is not locked.

### BRIEF DESCRIPTION OF THE DRAWINGS

Fig. 1 is a left side view of a motorcycle;
Fig. 2 is a schematic plan view of the motorcycle;
Fig. 3 is a schematic structure diagram showing a structure of a braking system;
Fig. 4 is a schematic structure diagram of the braking system when a brake lever is operated;
Fig. 5 is a schematic structure diagram of the braking system when a brake pedal is operated;
Fig. 6 is a schematic structure diagram of the braking system for explaining ABS action of a second braking force generating mechanism when the brake lever is being operated;
Fig. 7 is a schematic structure diagram of the braking system for explaining ABS action of a first and the second braking force generating mechanisms when the brake pedal is being operated;
Fig. 8 is a flowchart showing adjustment and control of hydraulic pressure;
Fig. 9 is a flowchart showing adjustment and control of hydraulic pressure;
Fig. 10 is a flowchart showing adjustment and control of hydraulic pressure;
Fig. 11 shows an example of a first hydraulic pressure map;
Fig. 12 shows an example of a deceleration map;
Fig. 13 shows an example of a second hydraulic pressure map, wherein a solid line indicates the second hydraulic pressure map and a dotted broken line indicates a first hydraulic pressure map;
Fig. 14 shows an example of an upper limit hydraulic pressure map, wherein a solid line indicates the upper limit hydraulic pressure map and a dotted broken line indicates the first hydraulic pressure map; and
Fig. 15 is a schematic structure diagram showing a structure of a braking system according to a second embodiment that illustrates the subject matter of the independent claim 1.

### DESCRIPTION OF THE PREFERRED EMBODIMENT

### [First Embodiment]

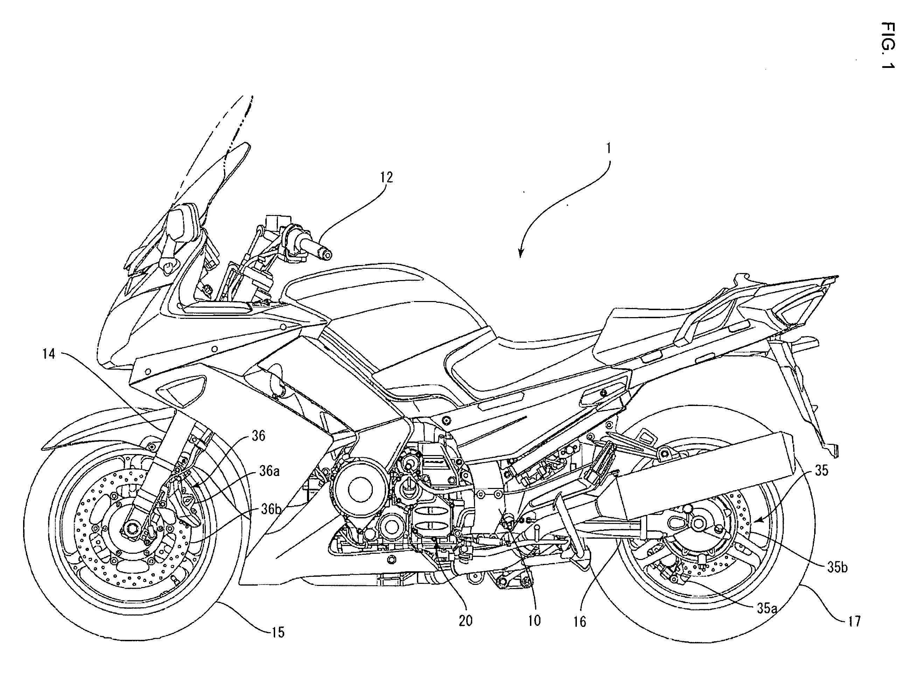

In this embodiment, one example will be described based on a motorcycle 1 in a narrow sense shown in Fig. 1.

The motorcycle is not limited to the motorcycle in the narrow sense. The motorcycle refers to any vehicle on which a rider straddles. The motorcycle includes an ATV (All Terrain Vehicle), and a motorcycle in a broad sense. The motorcycle in the broad sense includes a moped, a motocrosser and a scooter in a narrow sense in addition to the motorcycle in the narrow sense. The motorcycle in the broad sense includes a vehicle having two or more front wheels and/or two or more rear wheels.

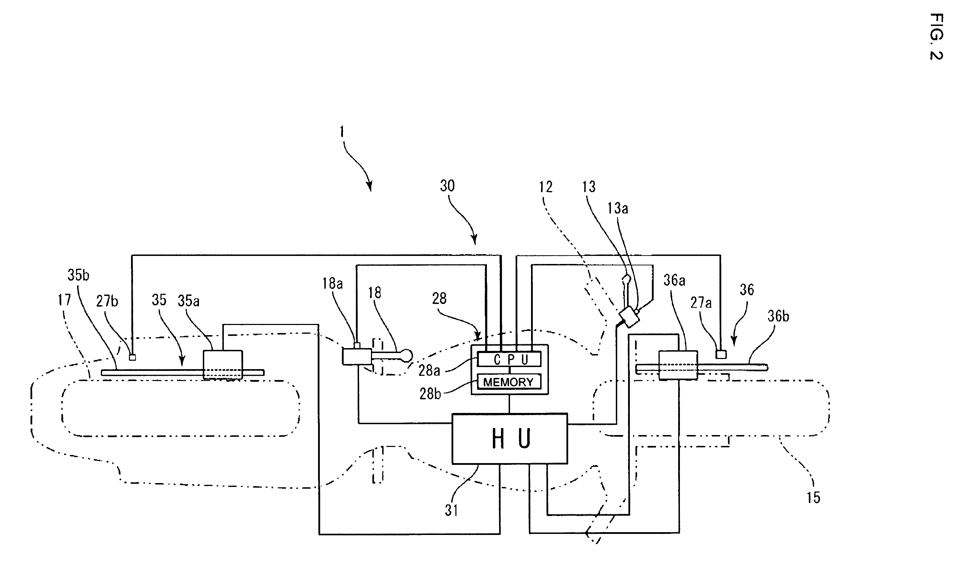

First, a schematic structure of the motorcycle 1 will be described with reference to Figs. 1 and 2. As shown in Fig. 1, the motorcycle 1 includes a body frame 10. A head pipe (not shown) is formed on a front end portion of the body frame 10. A steering shaft (not shown) is rotatably inserted into the head pipe. A pair of left and right front forks 14 are mounted on the steering shaft. A front wheel 15 is rotatably supported at lower end portions of the pair of left and right front forks 14. A steering handle bar 12 is mounted on the head pipe.

A pivot shaft (not shown) is mounted on a rear end portion of the body frame 10. A rear arm 16 is swingably mounted on the pivot shaft. A rear wheel 17 is rotatably supported by a rear end portion of the rear arm 16. The rear wheel 17 is driven by an engine 20 which is suspended by the body frame 10.

As shown in Fig. 2, the motorcycle 1 is provided with a braking system 30. The braking system 30 is for decelerating the motorcycle 1. The braking system 30 of the embodiment includes a front wheel-side braking mechanism which applies a brake to the front wheel 15, a rear wheel-side braking mechanism which applies a brake to the rear wheel 17, a front association mechanism, a rear association mechanism, and an ABS mechanism. The front association mechanism refers to a mechanism which drives the rear wheel-side braking mechanism when the front wheel-side braking mechanism is operated. The rear association mechanism refers to a mechanism which drives the front wheel-side braking mechanism when the rear wheel-side braking mechanism is operated. Most mechanisms of the braking system 30 are accommodated in a HU (Hydraulic Unit) 31.

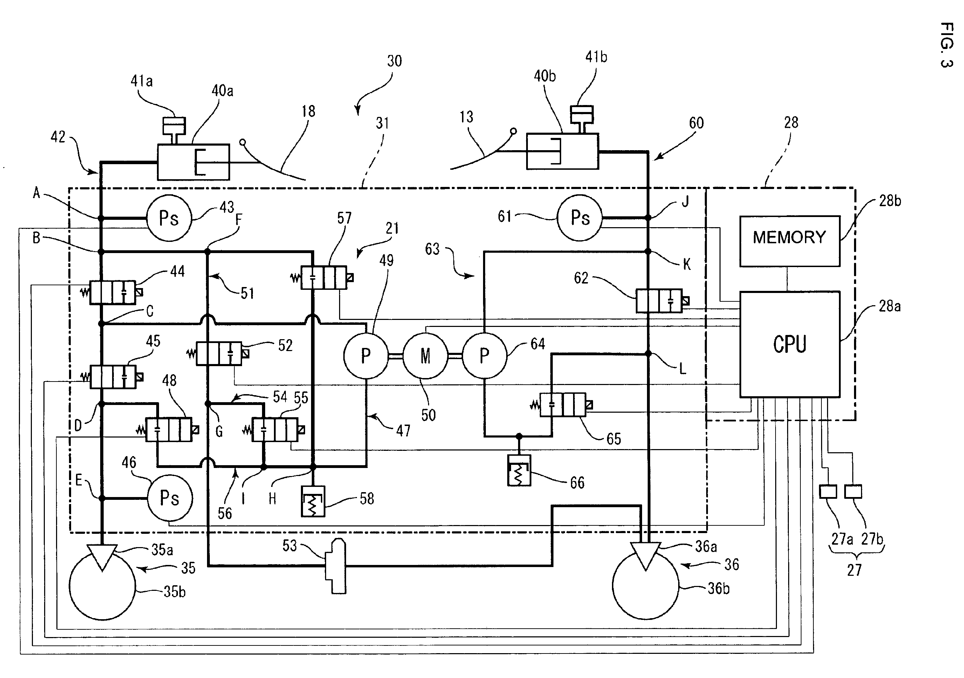

The structure of the braking system 30 will be described in detail with reference to Figs. 2 and 3. As shown in Fig. 3, the braking system 30 includes a first braking force generating mechanism 35 and a second braking force generating mechanism 36.

As shown in Fig. 2, the first braking force generating mechanism 35 is provided to the rear wheel 17. The first braking force generating mechanism 35 is supplied with hydraulic pressure, thereby generating a braking force for the rear wheel 17. More specifically, the first braking force generating mechanism 35 includes a first caliper 35a and a first brake disk 35b. The first brake disk 35b rotates together with the rear wheel 17.

The second braking force generating mechanism 36 is provided to the front wheel 15. The second braking force generating mechanism 36 is supplied with hydraulic pressure, thereby generating a braking force for the front wheel 15. The second braking force generating mechanism 36 includes a second caliper 36a and a second brake disk 36b. More specifically, the second brake disk 36b rotates together with the front wheel 15.

As shown in Fig. 3, the first braking force generating mechanism 35 is connected to a first master cylinder 40a through a first brake fluid passage 42. A reservoir tank 41 a and a brake pedal 18 as a first operation member are connected to the first master cylinder 40a. If a rider operates the brake pedal 18, hydraulic pressure is supplied from the first master cylinder 40a to the first braking force generating mechanism 35. As shown in Fig. 2, the brake pedal 18 is provided with a stroke sensor 18a. An operation amount of the brake pedal 18 is detected also by the stroke sensor 18a. The detected operation amount of the brake pedal 18 is output to a CPU 28a.

A second hydraulic pressure sensor 43 is connected to a point A of the first brake fluid passage 42. The second hydraulic pressure sensor 43 detects a hydraulic pressure at the point A of the first brake fluid passage 42.

A first on-off valve 44 and a third on-off valve 45 are disposed in the first brake fluid passage 42. The first on-off valve 44 is disposed between a point B and a point C of the first brake fluid passage 42. The first on-off valve 44 is an open-when-nonenergized type on-off valve which opens when electric power is not supplied thereto, and which closes when electric power is supplied thereto. The third on-off valve 45 is disposed between the point C and a point D of the first brake fluid passage 42. The third on-off valve 45 is also an open-when-nonenergized type on-off valve like the first on-off valve 44.

In this embodiment, the first on-off valve 44, the third brake fluid passage 47 as the association mechanism brake fluid passage, the first brake fluid pump 49 and the second on-off valve 57 constitute the front association mechanism 21.

A third hydraulic pressure sensor 46 is connected to a point E of the first brake fluid passage 42. The third hydraulic pressure sensor 46 can measure hydraulic pressure more precisely than the second hydraulic pressure sensor 43. However, the second hydraulic pressure sensor 43 is more excellent in terms of the resistance to pressure than the third hydraulic pressure sensor 46.

Here, the point B of the first brake fluid passage 42 closer to the first master cylinder 40a and the point C closer to the first braking force generating mechanism 35 than a portion of the first brake fluid passage 42 where the first on-off valve 44 is disposed are connected to each other through a third brake fluid passage 47. The third brake fluid passage 47 extends from the point B to the point C through a point F and a point H.

**A (first)** brake fluid pump 49 is disposed in the third brake fluid passage 47. The brake fluid pump 49 is connected to a motor 50. The brake fluid pump 49 is activated when the motor 50 is driven by a later-described ECU 28. If the brake fluid pump 49 is activated, pressure on the side of the point B becomes low pressure and the pressure on the side of the point C becomes high pressure.

A second on-off valve 57 is disposed in the third brake fluid passage 47. More specifically, the second on-off valve 57 is disposed closer to the point B than the brake fluid pump 49 of the third brake fluid passage 47. The second on-off valve 57 is a closed-when-nonenergized type on-off valve which closes when electric power is not supplied thereto and which opens when electric power is supplied thereto.

Further, a buffer chamber 58 is connected to the point H of the third brake fluid passage 47.

The point F, which is located closer to the point B than the second on-off valve 57, is connected to the second caliper 36a through a fourth brake fluid passage 51. A fifth on-off valve 52 is disposed between the point F and a point G of the fourth brake fluid passage 51. The fifth on-off valve 52 is an open-when-nonenergized type on-off valve. A metering valve 53 is disposed between the point G of the fourth brake fluid passage 51 and the second caliper 36a.

The point D of the first brake fluid passage 42 and the point H of the third brake fluid passage 47 are connected to each other through a fifth brake fluid passage 56. A fourth on-off valve 48 is disposed in the fifth brake fluid passage 56. The fourth on-off valve 48 is a closed-when-nonenergized type on-off valve.

The point G of the fourth brake fluid passage 51 and a point I of the fifth brake fluid passage 56 are connected to each other through a sixth brake fluid passage 54. A sixth on-off valve 55 is disposed in the sixth brake fluid passage 54. The sixth on-off valve 55 is a closed-when-nonenergized type on-off valve.

The second braking force generating mechanism 36 is connected to a second master cylinder 40b through a second brake fluid passage 60. A reservoir tank 41 b and a brake lever 13 as a second operation member are connected to the second master cylinder 40b. If a rider operates the brake lever 13, hydraulic pressure is supplied from the second master cylinder 40b to the second braking force generating mechanism 36. As shown in Fig. 2, a stroke sensor 13a is provided to the brake lever 13. the operation amount of the brake lever 13 is detected also by the stroke sensor 13a. The detected operation amount of the brake lever 13 is output to the CPU 28a.

A first hydraulic pressure sensor 61 as an operation amount detection section is connected to a point J of the second brake fluid passage 60. The first hydraulic pressure sensor 61 detects hydraulic pressure at the point J of the second brake fluid passage 60. With this, the operation amount of the brake lever 13 as the second operation member is indirectly detected.

As described above, in this embodiment, the first hydraulic pressure sensor 61 detects both the hydraulic pressure in the second brake fluid passage 60 and the operation of the brake lever 13. Therefore, as compared with a case where a special-purpose sensor for detecting the operation of the brake lever 13 is provided, the number of parts can be reduced and the structure can be simplified.

A sensor which directly detects the operation amount of the brake lever 13 may be disposed instead of the first hydraulic pressure sensor 61, or together with the first hydraulic pressure sensor 61. An example of the sensor which directly detects the operation amount of the brake lever 13 includes a position sensor which detects a position of the brake lever 13.

A seventh on-off valve 62 is disposed in a portion closer to the second braking force generating mechanism 36 than the point J of the second brake fluid passage 60. The seventh on-off valve 62 is an open-when-nonenergized type on-off valve.

A point K of the second brake fluid passage 60 closer to the second master cylinder 40b and a point L of the second brake fluid passage 60 closer to the second braking force generating mechanism 36 than the seventh on-off valve 62 are connected to each other through a seventh brake fluid passage 63.

A second brake fluid pump 64 is disposed in the seventh brake fluid passage 63. The second brake fluid pump 64 is driven by the motor 50 mentioned above. If the second brake fluid pump 64 is driven, the pressure on the side of the point L becomes low pressure and the pressure on the side of the point K becomes high pressure.

In this embodiment, in a state where a power source of the motorcycle 1 is ON, the motor 50 is always driven, and the first and the second brake fluid pumps 49 and 64 are always activated.

An eighth on-off valve 65 is disposed between the second brake fluid pump 64 and the point L. The eighth on-off valve 65 is a closed-when-nonenergized type on-off valve. A buffer chamber 66 is connected to a connection point between the eighth on-off valve 65 and the second brake fluid pump 64.

As shown in Fig. 3, the ECU (Electronic Control Unit) 28 as a control unit is disposed adjacent to the HU 31. In this embodiment, the ECU 28 is used only for controlling the HU 31. An ECU (not shown) used for controlling the engine 20 shown in Fig. 1 is provided independently from the ECU 28. However, the present invention is not limited to this configuration. For example, one ECU 28 may control both the engine 20 and the HU 31.

The ECU 28 includes the CPU 28a as a calculating section and a memory 28b as a storing section connected to the CPU 28a. Various settings are stored in the memory 28b as will be described in detail later. Various detection values are also stored in the memory 28b.

The CPU 28a is connected to the on-off valves, the hydraulic pressure sensors and the motor 50 which are included in the HU 31. The on-off valves and the motor 50 included in the HU 31 are controlled by the CPU 28a. Hydraulic pressures detected by the hydraulic pressure sensors 43, 46 and 61 are sent to the CPU 28a.

A front wheel rotation speed sensor 27a and a rear wheel rotation speed sensor 27b are connected to the CPU 28a. A rotation speed of the front wheel 15 is detected by the front wheel rotation speed sensor 27a and is output to the CPU 28a. A rotation speed of the rear wheel 17 is detected by the rear wheel rotation speed sensor 27b and is output to the CPU 28a.

In this embodiment, the CPU 28a calculates a vehicle speed which is a speed of the motorcycle 1 based on output from the front wheel rotation speed sensor 27a and the rear wheel rotation speed sensor 27b. That is, in this embodiment, the front wheel rotation speed sensor 27a and the rear wheel rotation speed sensor 27b constitute a vehicle speed sensor 27.

A method for calculating a vehicle speed from the front wheel rotation speed and the rear wheel rotation speed is not especially limited. For example, an average value of the front wheel rotation speed and the rear wheel rotation speed may be defined as the vehicle speed.

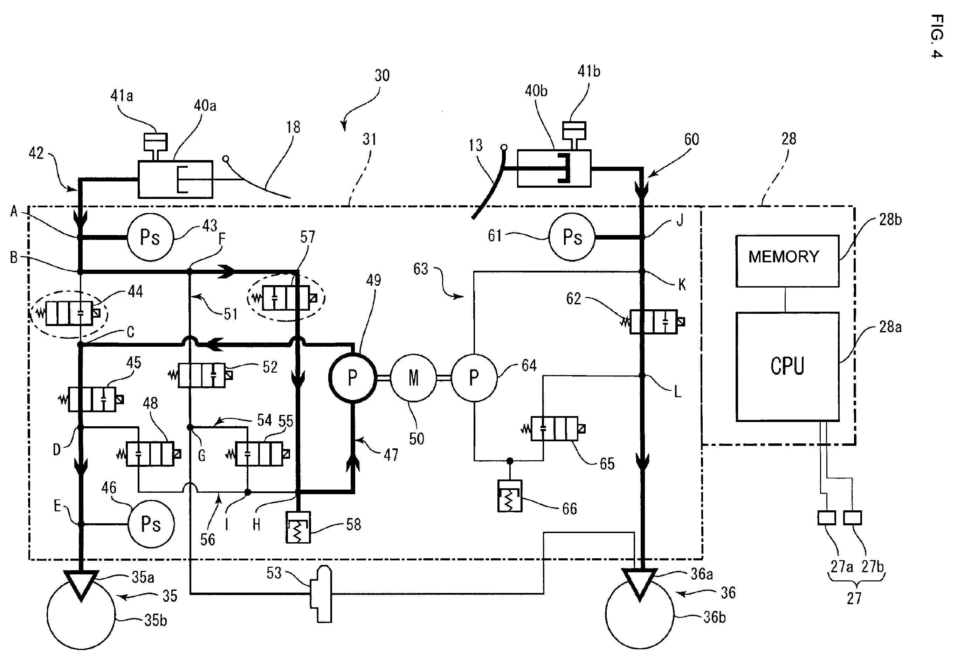

Next, basic control action of the braking system 30 will be described with reference to Figs. 4 to 7. In Figs. 4 to 7, on-off valves which are surrounded by phantom lines are energized on-off valves. On the other hand, on-off valves which are not surrounded by the phantom lines are nonenergized on-off valves.

Fig. 4 is a schematic structure diagram of the braking system when the brake lever 13 is operated. As shown in Fig. 4, if a rider operates the brake lever 13, hydraulic pressure is supplied from the second master cylinder 40b. Here, the seventh on-off valve 62 is the open-when-nonenergized type on-off valve. Therefore, hydraulic pressure from the second master cylinder 40b is supplied to the second caliper 36a through the second brake fluid passage 60. With this, a braking force is generated in the second braking force generating mechanism 36 which is provided to the front wheel 15.

If the brake lever 13 is operated, the increase of hydraulic pressure in the second brake fluid passage 60 is detected by the first hydraulic pressure sensor 61, and this fact is output to the ECU 28. The ECU 28 determines whether or not the brake lever 13 is operated based on hydraulic pressure in the second brake fluid passage 60.

If the ECU 28 determines that the brake lever 13 is operated, the ECU 28 closes the first on-off valve 44 and opens the second on-off valve 57. As a result, brake fluid in the first master cylinder 40a is sucked by the first brake fluid pump 49, and the brake fluid is supplied to the first caliper 35a through the third brake fluid passage 47 and the first brake fluid passage 42. With this, a braking force is generated in the first braking force generating mechanism 35 which is provided to the rear wheel 17.

In the braking system 30, if the brake lever 13 is operated, a braking force is generated in the second braking force generating mechanism 36 and a braking force is generated also in the first braking force generating mechanism 35.

This associationed operation is realized through the ECU 28. For this reason, this front associationed operation is called an electrically associationed operation.

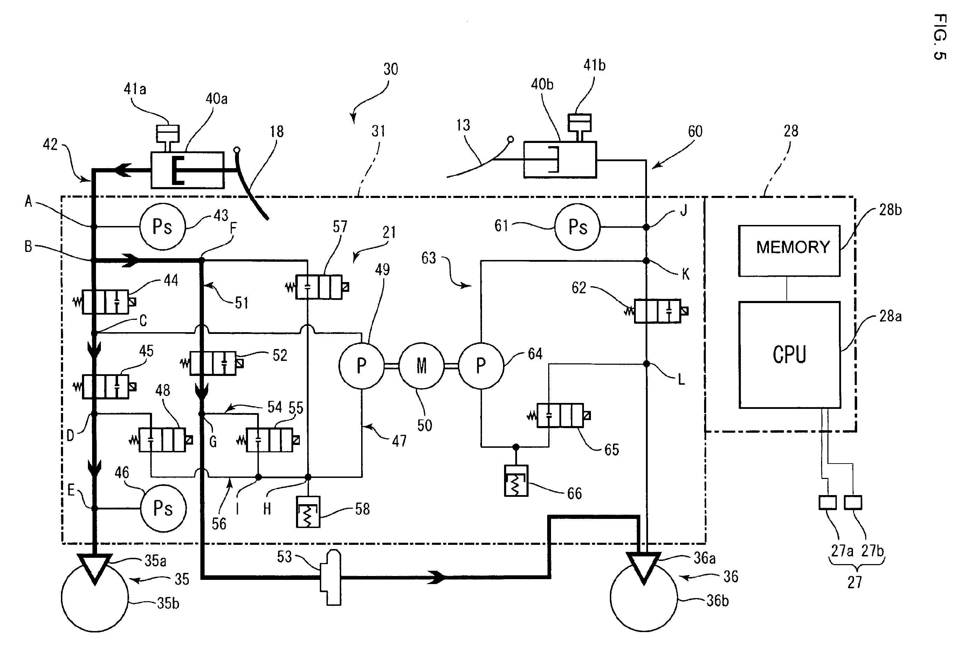

Fig. 5 is a schematic structure diagram of the braking system when the brake pedal 18 is operated. As shown in Fig. 5, if the brake pedal 18 is operated, brake fluid is discharged from the first master cylinder 40a. Here, the first on-off valve 44 and the third on-off valve 45 are open-when-nonenergized type on-off valves. Therefore, the brake fluid discharged from the first master cylinder 40a is supplied to the first caliper 35a through the first brake fluid passage 42. With this, a braking force is generated in the first braking force generating mechanism 35 which is provided to the rear wheel 17.

The fifth on-off valve 52 is also the open-when-nonenergized type on-off valve. Therefore, brake fluid discharged from the first master cylinder 40a is supplied also to the second caliper 36a through the fourth brake fluid passage 51. With this, a braking force is generated in the second braking force generating mechanism 36 which is provided to the front wheel 15.

Thus in the braking system 30, if the brake pedal 18 is operated, a braking force is generated not only in the first braking force generating mechanism 35 but also in the second braking force generating mechanism 36.

This associationed operation is different from the associationed operation caused when the brake lever 13 is operated and is mechanically performed without using the ECU 28. Thus, this rear associationed operation is called a mechanically associationed operation.

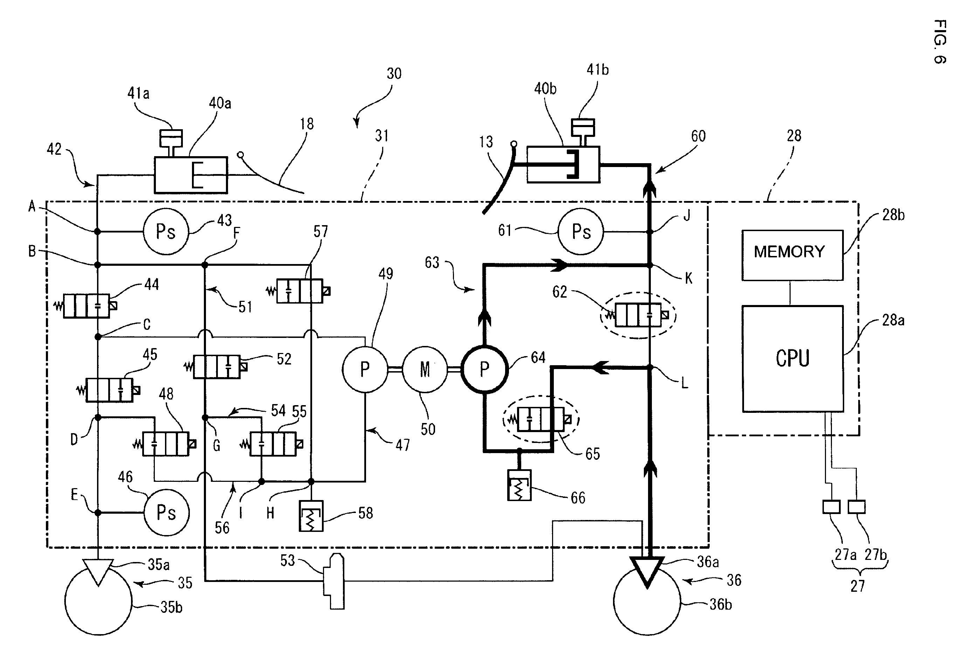

Fig. 6 is a schematic structure diagram of the braking system for describing the ABS action of the second braking force generating mechanism 36 when the brake lever 13 is operated.

The ECU 28 detects a locked state of the front wheel 15 based on output from the front wheel rotation speed sensor 27a and output from the rear wheel rotation speed sensor 27b. More specifically, the ECU 28 detects the locked state of the front wheel 15 when the magnitude of the front wheel rotation speed is largely reduced with respect to the vehicle speed.

If the ECU 28 detects the locked state of the front wheel 15, the ECU 28 supplies current to the seventh and the eighth on-off valves 62 and 65. With this, the seventh on-off valve 62 is closed and the eighth on-off valve 65 is opened. Therefore, brake fluid is sent from the second caliper 36a to the second master cylinder 40b through the seventh brake fluid passage 63. As a result, a braking force generated in the second braking force generating mechanism 36 is reduced.

If the ECU 28 detects that the locked state of the front wheel 15 is released, the ECU 28 stops the current supply to the seventh and the eighth on-off valves 62 and 65. With this, the seventh on-off valve 62 is opened and the eighth on-off valve 65 is closed. As a result, a braking force generated in the second braking force generating mechanism 36 is again increased.

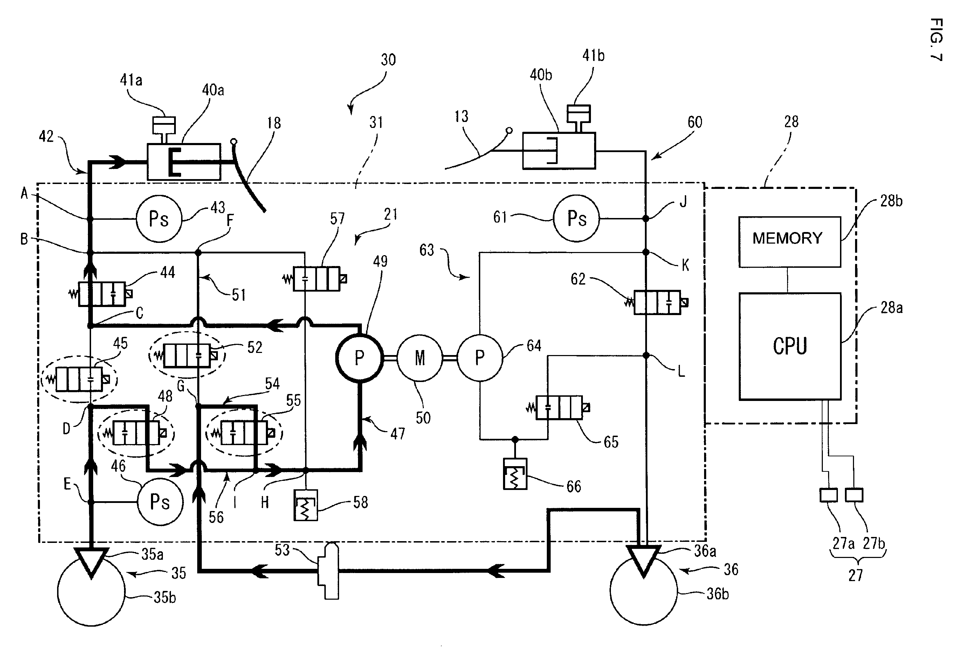

Fig. 7 is a schematic structure diagram of the braking system for describing the ABS action of the first and the second braking force generating mechanisms 35 and 36 when the brake pedal 18 is operated.

The ECU 28 detects the locked state of the rear wheel 17 based on output from the front wheel rotation speed sensor 27a and output from the rear wheel rotation speed sensor 27b. More specifically, the ECU 28 detects the locked state of the rear wheel 17 when the level of the rear wheel rotation speed is largely reduced with respect to the vehicle speed.

If the ECU 28 detects the locked state of the rear wheel 17, the ECU 28 supplies current to the third on-off valve 45 and the fourth on-off valve 48. With this, the third on-off valve 45 is closed and the fourth on-off valve 48 is opened. Therefore, the brake fluid in the first caliper 35a is sent to the first master cylinder 40a through the third brake fluid passage 47. As a result, a braking force generated in the first braking force generating mechanism 35 is reduced.

If the ECU 28 detects that the locked state of the rear wheel 17 is released, the ECU 28 stops the current supply to the third and the fourth on-off valves 45 and 48. With this, the third on-off valve 45 is opened and the fourth on-off valve 48 is closed. As a result, a braking force generated in the first braking force generating mechanism 35 is again increased.

These ABS actions are the same also during the front associationed operation in which the brake lever 13 is being operated.

If the ECU 28 detects the locked state of the front wheel 15, the ECU 28 supplies current to the fifth on-off valve 52 and the sixth on-off valve 55 as shown in Fig. 7. With this, the fifth on-off valve 52 is closed and the sixth on-off valve 55 is opened. Thus, brake fluid in the second caliper 36a is sent to the second master cylinder 40b through the sixth brake fluid passage 54. As a result, a braking force generated in the second braking force generating mechanism 36 is reduced.

If the ECU 28 detects that the locked state of the front wheel 15 is released, the ECU 28 stops the current supply to the fifth and the sixth on-off valves 52 and 55. With this, the fifth on-off valve 52 is opened and the sixth on-off valve 55 is closed. As a result, a braking force generated in the second braking force generating mechanism 36 is again increased.

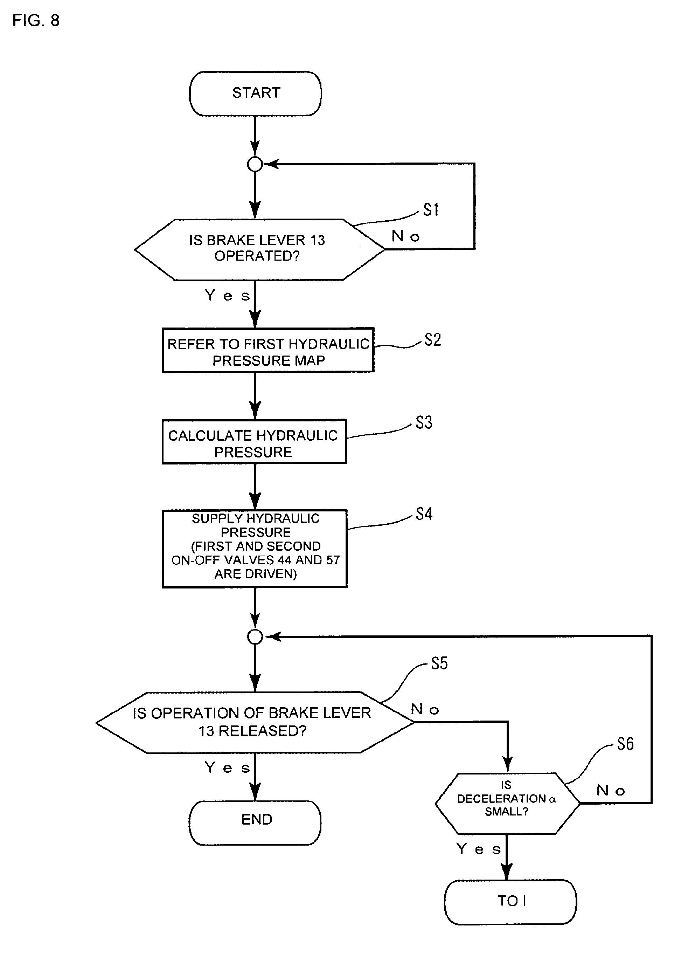

Next, detailed control during the front associationed operation in the braking system 30 will be described mainly with reference to Figs. 8 to 10.

According to this embodiment, a carrying amount is determined by a magnitude of the deceleration of the motorcycle 1 with respect to hydraulic pressure supplied to the second braking force generating mechanism 36. When the magnitude of the deceleration of the motorcycle 1 with respect to hydraulic pressure supplied to the second braking force generating mechanism 36 is smaller than a predetermined deceleration, it is determined that the carrying amount is great, and hydraulic pressure supplied to the first braking force generating mechanism 35 is increased. As a result, the braking force generated in the first braking force generating mechanism 35 is increased. Thus, a braking force suitable for the carrying amount acts on the motorcycle 1.

The adjustment and control of hydraulic pressure will be explained in detail with reference to Figs. 8 to 10. As shown in Fig. 8, it is determined in step S1 whether or not the brake lever 13 is operated by the ECU 28 shown in Fig. 3. More specifically, the ECU 28 determines whether or not hydraulic pressure detected by the first hydraulic pressure sensor 61 is higher than a predetermined hydraulic pressure. When hydraulic pressure detected by the first hydraulic pressure sensor 61 is less than the predetermined hydraulic pressure, the ECU 28 determines that the brake lever 13 is not operated. If hydraulic pressure detected by the first hydraulic pressure sensor 61 is equal to or higher than the predetermined hydraulic pressure, the ECU 28 determines that the brake lever 13 was operated.

When it is determined that the brake lever 13 is not operated, the procedure in step S1 is again executed. If it is determined that the brake lever 13 was operated, the procedure is advanced to steps S2 to S4. In steps S2 to S4, hydraulic pressure suitable for the operation amount of the brake lever 13 is supplied to the first braking force generating mechanism 35.

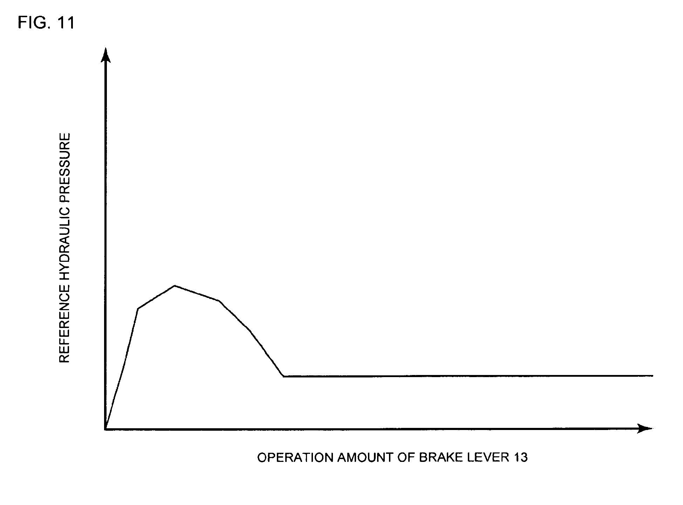

Specifically, in step S2, the **CPU** 28a of the ECU 28 refers to a first hydraulic pressure map stored in the memory 28b. Fig. 11 shows an example of the first hydraulic pressure map. As shown in Fig. 11, in the first hydraulic pressure map, a relation between an operation amount of the brake lever 13 as the second operation member and a reference hydraulic pressure supplied to the first braking force generating mechanism 35 is defined.

Next, in step S3, the **CPU** 28a calculates a reference hydraulic pressure supplied to the first braking force generating mechanism 35 by applying the operation amount of the brake lever 13 detected by the first hydraulic pressure sensor 61 as the operation amount detection section to the first hydraulic pressure map. Then in step S4, the first and the second on-off valves 44 and 57 are driven so that the reference hydraulic pressure is supplied to the first braking force generating mechanism 35. As a result, a braking force of a magnitude suitable for the current vehicle speed of the motorcycle 1 is generated in the first braking force generating mechanism 35.

After step S4, step S5 is executed. In step S5, it is determined whether or not the operation of the brake lever 13 is released. Specifically, it is determined whether or not hydraulic pressure detected by the first hydraulic pressure sensor 61 is equal to or higher than a predetermined hydraulic pressure. If hydraulic pressure detected by the first hydraulic pressure sensor 61 is less than the predetermined hydraulic pressure, the **CPU** 28a determines that the operation of the brake lever 13 is released. If, on the other hand, hydraulic pressure detected by the first hydraulic pressure sensor 61 is equal to or higher than the predetermined hydraulic pressure, the **CPU** 28a determines that the operation of the brake lever 13 is not released. The predetermined hydraulic pressure in step S5 and the predetermined hydraulic pressure in step S1 are usually different from each other in magnitude. However, the predetermined hydraulic pressure in step S5 and the predetermined hydraulic pressure in step S1 may be equal to each other.

If it is determined in step S5 that the operation of the brake lever 13 is not released, the procedure is advanced to the hydraulic pressure adjusting and control procedure in steps S6 to 16.

In step S6, a vehicle deceleration α is determined by the **CPU** 28a. That is, the **CPU** 28a determines whether or not the magnitude of the vehicle deceleration α with respect to hydraulic pressure supplied to the second braking force generating mechanism 36 is equal to or less than the predetermined deceleration.

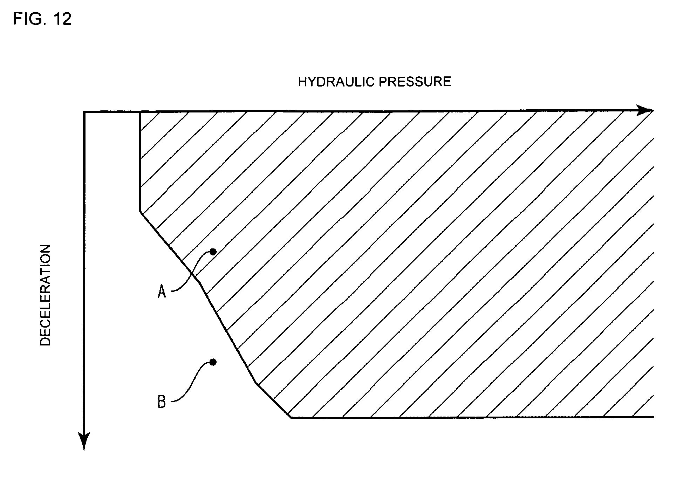

More specifically, a deceleration map shown in Fig. 12 is stored in the memory 28b. As shown in Fig. 12, a magnitude of the vehicle deceleration α with respect to hydraulic pressure supplied to the second braking force generating mechanism 36 is defined in the deceleration map. The **CPU** 28a first reads the deceleration map from the memory 28b. The **CPU** 28a plots a vehicle deceleration α obtained by differentiating a vehicle speed detected by the vehicle speed sensor 27 with respect to time and hydraulic pressure detected by the first hydraulic pressure sensor 61 in the deceleration map. As a result, when the plotted point is located closer to a low deceleration side than a predetermined deceleration map M, the **CPU** 28a determines that the vehicle deceleration α is smaller than a predetermined deceleration. That is, in Fig. 12, when the plotted point is in a hatched region, the **CPU** 28a determines that the vehicle deceleration α is smaller than the predetermined deceleration. When the plotted point is located closer to the high deceleration side than the predetermined deceleration map M, the **CPU** 28a determines that the vehicle deceleration α is equal to or higher than the predetermined deceleration.

For example, when a point A shown in Fig. 12 is plotted, the **CPU** 28a determines that the vehicle deceleration α is smaller than the predetermined deceleration. If a point B shown in Fig. 12 is plotted, the **CPU** 28a determines that the vehicle deceleration α is equal to or higher than the predetermined deceleration.

The carrying weight of the motorcycle 1 is correlated with magnitude of a deceleration with respect to a braking force generated against the motorcycle 1. The braking force generated against the motorcycle 1 is correlated with hydraulic pressure supplied to the second braking force generating mechanism 36. Therefore, the carrying weight of the motorcycle 1 is correlated with a magnitude of the deceleration with respect to hydraulic pressure supplied to the second braking force generating mechanism 36 (the "deceleration against hydraulic pressure", hereinafter). More specifically, there is a tendency that when the carrying weight of the motorcycle 1 is small the deceleration against hydraulic pressure is increased. There is a tendency that, when the carrying weight of the motorcycle 1 is great, on the other hand the deceleration against hydraulic pressure is reduced.

According to this embodiment, in step S6, the carrying weight of the motorcycle 1 is detected utilizing this phenomenon. That is, in step S6, a case where it is determined that the vehicle deceleration α is equal to or higher than the predetermined deceleration is a case where it is determined that the carrying weight is small and a braking force of sufficient magnitude with respect to the carrying weight of the motorcycle 1 is generated. In step S6, a case where it is determined that the vehicle deceleration α is smaller than the predetermined deceleration is a case where it is determined that the carrying weight is great and a braking force of sufficient magnitude with respect to the carrying weight of the motorcycle 1 is not generated.

As shown in Fig. 8, in step S6, when it is determined that the vehicle deceleration α is equal to or higher than the predetermined deceleration, the carrying weight is small and a braking force of sufficient magnitude with respect to the carrying weight of the motorcycle 1 is generated, the procedure is advanced to step S5. Thus, the magnitude of hydraulic pressure supplied to the first braking force generating mechanism 35 is maintained. Therefore, the magnitude of the current braking force of the motorcycle 1 is maintained at the reference hydraulic pressure.

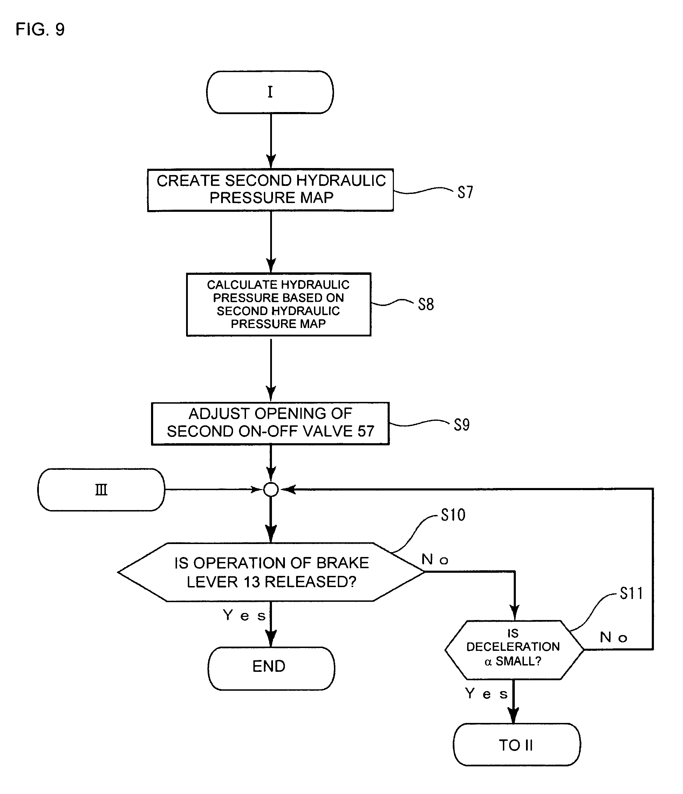

In step S6, it is determined that the vehicle deceleration α is smaller than the predetermined deceleration, the carrying weight is great and a braking force of a magnitude sufficient with respect to the carrying weight of the motorcycle 1 is not generated, the procedure is advanced to step S7 shown in Fig. 9.

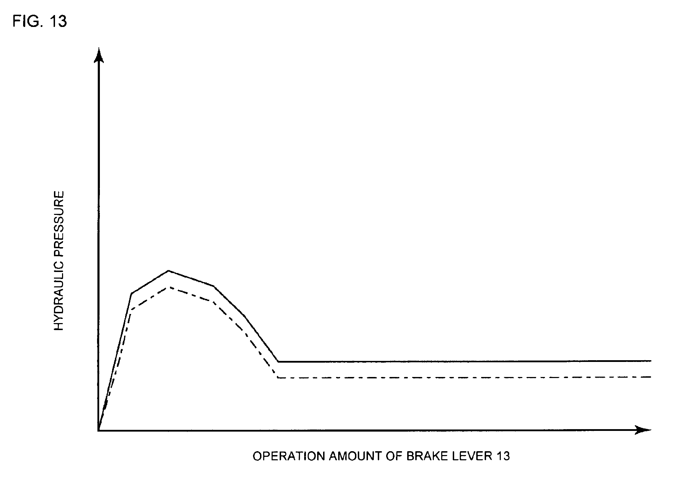

In step S7, the **CPU** 28a creates a second hydraulic pressure map. Fig. 13 shows one example of the second hydraulic pressure map. In Fig. 13, a solid line indicates the second hydraulic pressure map, and a dotted broken line indicates the first hydraulic pressure map.

More specifically, the **CPU** 28a creates the second hydraulic pressure map by adding a predetermined hydraulic pressure adjusting amount to the first hydraulic pressure map shown with the dotted broken line in Fig. 13. Here, the predetermined hydraulic pressure adjusting amount may be constant with respect to the vehicle speed of the motorcycle 1, or may be varied with respect to the vehicle speed of the motorcycle 1.

In step S8, the **CPU** 28a calculates a target hydraulic pressure by applying the current operation amount of the brake lever 13 to the second hydraulic pressure map. Then, in step S9, the **CPU** 28a adjusts the opening of the second on-off valve 57 such that hydraulic pressure supplied to the first braking force generating mechanism 35 becomes equal to hydraulic pressure calculated in step S8. As a result, hydraulic pressure based on the second hydraulic pressure map in which the predetermined hydraulic pressure adjusting amount is added is supplied to the first braking force generating mechanism 35. Thus, if it is determined in step S6 that the vehicle deceleration α is smaller than the predetermined deceleration, hydraulic pressure supplied to the first braking force generating mechanism 35 becomes high by the predetermined hydraulic pressure adjusting amount. As a result, a braking force acting on the motorcycle 1 is increased.

After step S9, step S10 is executed. In step S10, the ECU 28 determines whether or not the operation of the brake lever 13 is released as in step S5 shown in Fig. 8. If it is determined in step S10 that the operation of the brake lever 13 is not released, the procedure is advanced to step S11.

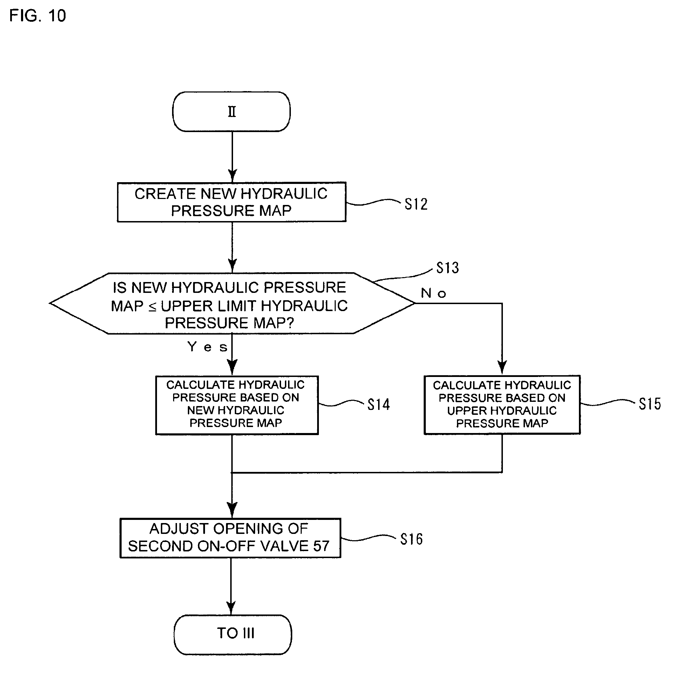

In step S11, like the above-described step S6, the **CPU** 28a determines whether or not the magnitude of the vehicle deceleration α with respect to hydraulic pressure supplied to the second braking force generating mechanism 36 is equal to or lower than a predetermined deceleration. In step S11, if it is determined that the magnitude of the vehicle deceleration α with respect to hydraulic pressure supplied to the second braking force generating mechanism 36 is greater than the predetermined deceleration, the procedure is returned to step S10. In step S11, on the other hand, if it is determined that the magnitude of the vehicle deceleration α with respect to hydraulic pressure supplied to the second braking force generating mechanism 36 is equal to or lower than the predetermined deceleration, the procedure is advanced to step S12 shown in Fig. 10.

In step S12, a new hydraulic pressure map is formed by the **CPU** 28a. More specifically, the **CPU** 28a adds a predetermined hydraulic pressure adjusting amount to the currently referred hydraulic pressure map, thereby creating a new hydraulic pressure map. The predetermined hydraulic pressure adjusting amount in step S12 may be the same as or different from the predetermined hydraulic pressure adjusting amount in step S7.

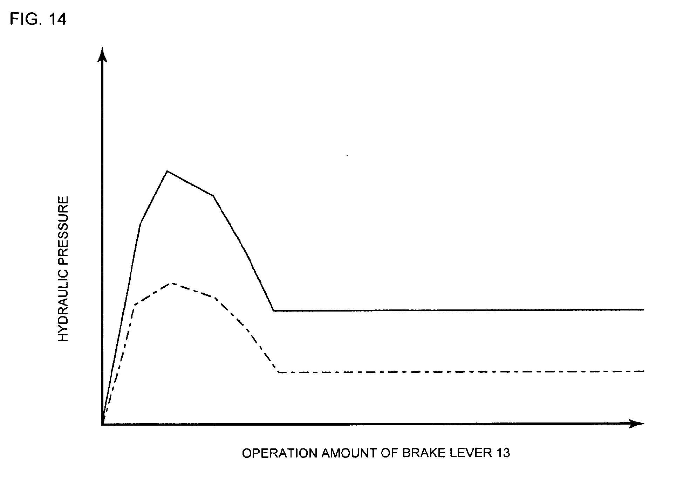

After step S12, step S13 is executed. In step S13, the **CPU** 28a determines whether or not hydraulic pressure defined in the new hydraulic pressure map is equal to or lower than an upper limit hydraulic pressure defined in an upper limit hydraulic pressure map. More specifically, the upper limit hydraulic pressure map is stored in the memory 28b. Fig. 14 shows one example of the upper limit hydraulic pressure map. In Fig. 14, a solid line indicates the upper limit hydraulic pressure map, and a dotted broken line indicates the first hydraulic pressure map. The **CPU** 28a reads the upper limit hydraulic pressure map. The **CPU** 28a determines whether or not hydraulic pressure calculated from the new hydraulic pressure map created in step S12 is equal to or lower than hydraulic pressure calculated from the upper limit hydraulic pressure map.

In step S13, if it is determined that hydraulic pressure calculated from the new hydraulic pressure map is equal to or lower than hydraulic pressure calculated from the upper limit hydraulic pressure map, the procedure is advanced to step S14. In step S14, a target hydraulic pressure is calculated by applying the current operation amount of the brake lever 13 to the new hydraulic pressure map created in step S12.

In step S13, if it is determined that hydraulic pressure calculated from the new hydraulic pressure map is greater than hydraulic pressure calculated from the upper limit hydraulic pressure map, the procedure is advanced to step S15. In step S15, the **CPU** 28a calculates the target hydraulic pressure by applying the current operation amount of the brake lever 13 to the upper limit hydraulic pressure map.

After steps S14 and S15, step S16 is executed. In step S16, the **CPU** 28a adjusts the opening of the second on-off valve 57 such that hydraulic pressure supplied to the first braking force generating mechanism 35 becomes equal to the target hydraulic pressure calculated in step S14 or S15.

From steps S12 to S16, if the deceleration against hydraulic pressure of the motorcycle 1 is small, hydraulic pressure supplied to the first braking force generating mechanism 35 is increased to the extent that hydraulic pressure does not exceed the upper limit hydraulic pressure.

If step S16 is completed, step S10 shown in Fig. 9 is again executed. That is, steps S11 to S16 are repeatedly executed over the time period until the operation of the brake lever 13 is released. If the brake lever 13 is again operated after the operation of the brake lever 13 is released, the procedure is carried out again from step S1. That is, the adjusting and controlling operation of hydraulic pressure is independently carried out whenever the brake lever 13 is operated.

As explained above, in this embodiment, the carrying weight of the motorcycle 1 is determined depending upon the deceleration against hydraulic pressure which is a magnitude of deceleration with respect to hydraulic pressure supplied to the second braking force generating mechanism 36. Thus, even when the front wheel 15 or the rear wheel 17 is not locked, the carrying weight of the motorcycle 1 can be determined.

The association mechanism 21 is driven by the ECU 28 in accordance with the carrying weight. More specifically, when the deceleration against hydraulic pressure is smaller than the predetermined deceleration, hydraulic pressure supplied to the first braking force generating mechanism 35 is increased. Thus, even when the front wheel 15 or the rear wheel 17 is not locked, it is possible to cause the motorcycle 1 to generate a braking force suitable for the carrying weight of the motorcycle 1.

In this embodiment, adjustment and control of hydraulic pressure in steps S6 to S16 as described above are repeatedly executed over the operation time period of the brake lever 13. Thus, it is possible to cause the motorcycle 1 to generate a braking force of a magnitude suitable for the carrying weight of the motorcycle 1 over the operation time period of the brake lever 13.

The hydraulic pressure is adjusted and controlled to the extent that hydraulic pressure supplied to the first braking force generating mechanism 35 does not exceed the predetermined upper limit hydraulic pressure. Thus, it is possible to prevent a braking force generated in the first braking force generating mechanism 35 from excessively increasing with respect to a braking force generated in the second braking force generating mechanism 36. Thus, even when the front wheel 15 or the rear wheel 17 is not locked, a braking force of a magnitude suitable for the carrying weight can be generated in the motorcycle 1, and a braking force distribution between the first braking force generating mechanism 35 and the second braking force generating mechanism 36 can be optimized.

In this embodiment, hydraulic pressure is adjusted and controlled independently whenever the brake lever 13 is operated. Thus, it is possible to prevent the rear wheel 17 from being locked.

For example, when the brake lever 13 is again operated, it is possible to refer to the hydraulic pressure map which was referred to when the brake lever 13 was operated last time. However, when the carrying weight is reduced until the brake lever 13 is operated after the brake lever 13 was operated last time, a large braking force is to be generated in the first braking force generating mechanism 35. Thus, the rear wheel 17 is prone to be locked.

According to this embodiment, on the other hand, adjustment and control of hydraulic pressure is carried out independently whenever the brake lever 13 is operated. That is, in the initial stage of operation of the brake lever 13, the first hydraulic pressure map is definitely referred to. Thus, it is possible to prevent a large braking force from being generated in the first braking force generating mechanism 35. As a result, it is possible to prevent the rear wheel 17 from being locked.

In this embodiment, the magnitude of hydraulic pressure supplied to the first braking force generating mechanism 35 is adjusted by adjusting the opening of the second on-off valve 57. For this reason, it is possible to more swiftly and precisely adjust hydraulic pressure as compared with a case where the magnitude of hydraulic pressure supplied to the first braking force generating mechanism 35 is adjusted by adjusting output of the first brake fluid pump 49.

In this embodiment, the first on-off valve 44 is the open-when-nonenergized type on-off valve and the second on-off valve 57 is the closed-when-nonenergized type on-off valve. Thus, when the association mechanism 21 is not driven, it is unnecessary to supply electric power to the first and the second on-off valves 44 and 57. It is only necessary to supply electric power to the first and the second on-off valves 44 and 57 only when the association mechanism 21 is driven. Thus, electric power consumed in the motorcycle 1 can be reduced.

### [Second Embodiment]

In the above embodiment, the carrying weight of the motorcycle 1 is determined by the deceleration against hydraulic pressure. However, according to the subject matter of the independent claim 1, the method of determining the carrying weight is not limited to this. The carrying weight of the motorcycle 1 may be determined by a weight of the motorcycle 1 detected by the G sensor, for example. It is to be noted that, in the description of this embodiment, members which have substantially the same functions as those of the first embodiment are designated with the same symbols and numerals, and description thereof will be omitted. Figs. 1, 2 and 11 are referred to like the first embodiment.

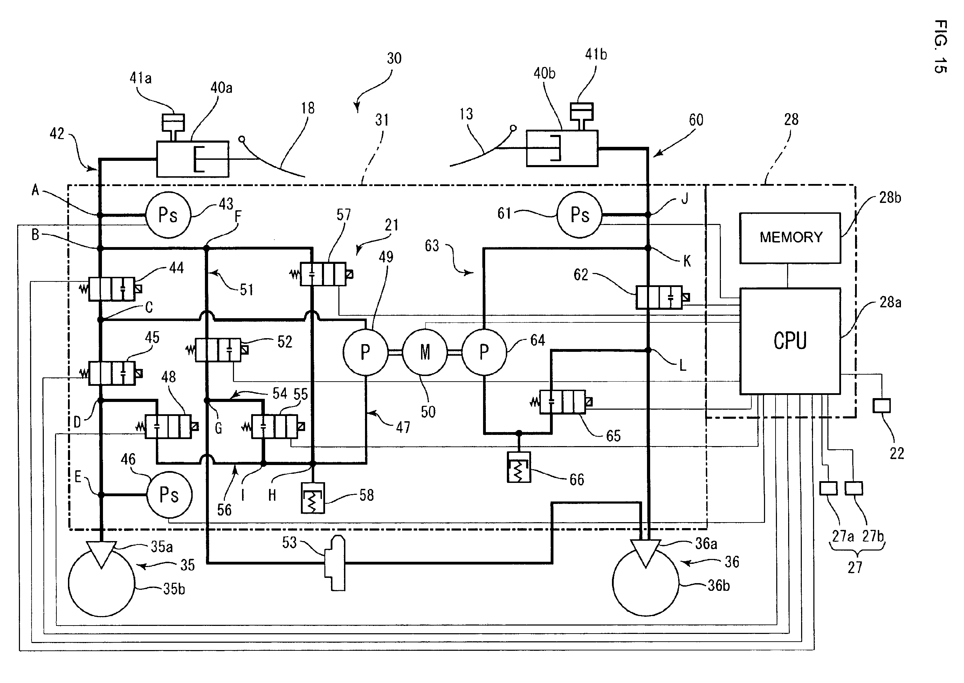

Fig. 15 is a schematic structure diagram showing a structure of a braking system of the second embodiment. As shown in Fig. 15, this embodiment includes a G sensor 22. The G sensor 22 detects a weight of the motorcycle 1. The G sensor 22 outputs the detected weight to the CPU 28a.

In this embodiment, the CPU 28a determines whether or not the weight which is output from the G sensor 22 is equal to or lower than a predetermined weight. If the weight which is output from the G sensor 22 is equal to or lower than the predetermined weight, the CPU 28a determines a magnitude of hydraulic pressure supplied to the first braking force generating mechanism 35 based on the first hydraulic pressure map shown in Fig. 11. If the weight output from the G sensor 22 is greater than the predetermined weight, the CPU 28a determines the magnitude of hydraulic pressure supplied to the first braking force generating mechanism 35 based on the hydraulic pressure map in which a hydraulic pressure adjusting amount suitable for the weight output from the G sensor 22 is added to the first hydraulic pressure map. Thus, in the second embodiment also, like the first embodiment, it is possible to cause the motorcycle 1 to generate a braking force of a magnitude suitable for a carrying weight of the motorcycle 1 even when the front wheel 15 and the rear wheel 17 are not locked.

## Claims

1. A braking system for a motorcycle, including:
a first hydraulic pressure supply mechanism (40a) which supplies hydraulic pressure;
a first braking force generating mechanism (35) which generates a braking force when hydraulic pressure is supplied from the first hydraulic pressure supply mechanism (40a); a first operation member (18) for operating the first braking force generating mechanism (35);
a second hydraulic pressure supply mechanism (40b) which supplies hydraulic pressure;
a second braking force generating mechanism (36) which generates a braking force when hydraulic pressure is supplied from the second hydraulic pressure supply mechanism (40b);
a second operation member (13) for operating the second braking force generating mechanism (36);
a association mechanism which supplies hydraulic pressure to the first braking force generating mechanism (35) when the second operation member (13) is operated;
a sensor (22) which detects a weight of the motorcycle;
a control unit (28) which controls the association mechanism, the control unit (28) determines a magnitude of hydraulic pressure supplied to the first braking force generating mechanism (35) based on a hydraulic pressure map according to the weight of the motorcycle detected by said sensor (22)
**characterized by**
a hydraulic pressure sensor (61) which detects hydraulic pressure supplied to the second braking force generating mechanism (36), wherein the control unit (28) determines whether or not the weight which is output from the sensor (22) is equal to or lower than the predetermined weight, and if the weight which is output from the sensor (22) is equal to or lower than the predetermined weight, the control unit (28) determines a magnitude of hydraulic pressure supplied to the first braking force generating mechanism (35) based on said hydraulic pressure map, and if the weight output from the sensor (22) is greater than the predetermined weight, the control unit (28) determines the magnitude of hydraulic pressure supplied to the first braking force generating mechanism (35) based on the hydraulic pressure map in which a hydraulic pressure adjusting amount according to the weight output from the sensor (22) is added to the hydraulic pressure map, the control unit (28) adjusts and controls the association mechanism so as to increase hydraulic pressure supplied to the first braking force generating mechanism (35) by the association mechanism.

2. A braking system for a motorcycle according to claim 1, **characterized in that** said sensor is a G-sensor (22).

3. A braking system for a motorcycle according to claim 1 or 2, **characterized in that** the first operation member (18) is operating the first hydraulic pressure supply mechanism (40a) for operating the first braking force generating mechanism (35), and
the second operation member (13) is operating the second hydraulic pressure supply mechanism (40b) for operating the second braking force generating mechanism (36).

## Patentansprüche

1. Ein Bremssystem für ein Motorrad enthaltend:
eine erste Hydraulikdruck-Zuführungsvorrichtung (40a), die einen Hydraulikdruck zuführt;
eine erste Bremskraft-Erzeugungsvorrichtung (35), die eine Bremskraft erzeugt, wenn von der ersten Hydraulikdruck-Zuführungsvorrichtung (40a) ein Hydraulikdruck zugeführt wird;
ein erstes Betätigungsteil (18) zum Betätigen der ersten Bremskraft-Erzeugungsvorrichtung (35);
eine zweite Hydraulikdruck-Zuführungsvorrichtung (40b), die Hydraulikdruck zuführt;
eine zweite Bremskraft-Erzeugungsvorrichtung (36), die eine Bremskraft erzeugt, wenn Hydraulikdruck von der zweiten Hydraulikdruck-Zuführungsvorrichtung (40b) zugeführt wird;
ein zweites Betätigungsteil (13) zum Betätigen der zweiten Bremskraft-Erzeugungsvorrichtung (36);
eine Verbundvorrichtung, die Hydraulikdruck zu der ersten Bremskraft-Erzeugungsvorrichtung (35) zuführt, wenn das zweite Betätigungsteil (13) betätigt wird;
einen Sensor (22), der ein Gewicht des Motorrads erfasst;
eine Steuerungseinheit (28), welche die Verbundvorrichtung steuert, die Steuerungseinheit (28) bestimmt eine Größe des Hydraulikdrucks zugeführt zu der ersten Bremskraft-Erzeugungsvorrichtung (35) auf Grundlage eines Hydraulikdruck-Kennfeldes gemäß dem Gewicht des Motorrads erfasst durch diesen Sensor (22),
**gekennzeichnet durch**
einen Hydraulikdruck-Sensor (61), der einen Hydraulikdruck erfasst zugeführt zu der zweiten Bremskraft-Erzeugungsvorrichtung (36), wobei die Steuerungseinheit (28) bestimmt, ob oder nicht das Gewicht ausgegebenen von dem Sensor (22) gleich oder niedriger ist als ein vorgegebenes Gewicht, und wenn das Gewicht, das ausgegeben ist von dem Sensor (22), gleich oder niedriger als das vorgegebene Gewicht ist, bestimmt die Steuerungseinheit (28) eine Größe des Hydraulikdrucks zugeführt zu der ersten Bremskraft-Erzeugungsvorrichtung (35) auf Grundlage dieses Hydraulikdruck-Kennfeldes, und wenn das Gewicht ausgegeben von dem Sensor (22) größer als das vorgegebene Gewicht ist, bestimmt die Steuerungseinheit (28) die Größe des Hydraulikdrucks zugeführt zu der ersten Bremskraft-Erzeugungsvorrichtung (35) auf Grundlage des Hydraulikdruck-Kennfeldes in dem ein Hydraulikdruck-Anpassungswert gemäß dem Gewicht ausgegeben von dem Sensor (22) auf das Hydraulikdruck-Kennfeld addiert ist, die Steuerungseinheit (28) passt und steuert die Verbundvorrichtung derart an, dass Hydraulikdruck zugeführt zu der ersten Bremskraft-Erzeugungsvorrichtung (35) durch die Verbundvorrichtung erhöht ist.

2. Ein Bremssystem für ein Motorrad gemäß Anspruch 1, **dadurch gekennzeichnet, dass** dieser Sensor ein G-Sensor (22) ist.

3. Ein Bremssystem für ein Motorrad gemäß Anspruch 1 oder 2, **dadurch gekennzeichnet, dass** das erste Betätigungsteil (18) die erste Hydraulikdruck-Zuführungsvorrichtung (40a) zum Betätigen der ersten Bremskraft-Erzeugungsvorrichtung (35) betätigt, um das zweite Betätigungsteil (13) die zweite Hydraulikdruck-Zuführungsvorrichtung (40b) zum Betätigen der zweiten Bremskraft-Erzeugungsvorrichtung (36) betätigt.

## Revendications

1. Système de freinage pour motocyclette, comprenant :
- un premier mécanisme d'alimentation de pression hydraulique (40a) qui fournit une pression hydraulique ;
- un premier mécanisme de génération de force de freinage (35) qui génère une force de freinage lorsqu'une pression hydraulique est fournie par le premier mécanisme d'alimentation de pression hydraulique (40a) ;
- un premier élément d'actionnement (18) pour actionner le premier mécanisme de génération de force de freinage (35) ;
- un deuxième mécanisme d'alimentation de pression hydraulique (40b) qui fournit une pression hydraulique ;
- un deuxième mécanisme de génération de force de freinage (36) qui génère une force de freinage lorsqu'une pression hydraulique est fournie par le deuxième mécanisme d'alimentation de pression hydraulique (40b) ;
- un deuxième élément d'actionnement (13) pour actionner le deuxième mécanisme de génération de force de freinage (36) ;
- un mécanisme d'association qui fournit une pression hydraulique au premier mécanisme de génération de force de freinage (35) lorsque le deuxième élément d'actionnement (13) est actionné ;
- un capteur (22) qui détecte un poids de la motocyclette ;
- une unité de contrôle (28) qui contrôle le mécanisme d'association, l'unité de contrôle (28) déterminant une valeur de la pression hydraulique fournie au premier mécanisme de génération de force de freinage (35) en se fondant sur une table de pression hydraulique suivant le poids de la motocyclette détecté par ledit capteur (22),
- **caractérisé par** :
- un capteur de pression hydraulique (61) qui détecte la pression hydraulique fournie au deuxième mécanisme de génération de force de freinage (36), dans lequel l'unité de contrôle (28) détermine si le poids délivré en sortie du capteur (22) est ou non inférieur ou égal au poids prédéterminé et, si le poids délivré en sortie du capteur (22) est inférieur ou égal au poids prédéterminé, l'unité de contrôle (28) détermine une valeur de la pression hydraulique fournie au premier mécanisme de génération de force de freinage (35) en se fondant sur ladite table de pression hydraulique et, si le poids délivré en sortie du capteur (22) est supérieur au poids prédéterminé, l'unité de contrôle (28) détermine la valeur de la pression hydraulique fournie au premier mécanisme de génération de force de freinage (35) en se fondant sur la table de pression hydraulique, dans lequel une quantité d'ajustement de pression hydraulique suivant le poids délivré en sortie du capteur (22) est ajoutée à la table de pression hydraulique, l'unité de contrôle (28) ajuste et contrôle le mécanisme d'association de façon à accroitre la pression hydraulique fournie au premier mécanisme de génération de force de freinage (35) par le mécanisme d'association.

2. Système de freinage pour motocyclette selon la revendication 1, **caractérisé en ce que** ledit capteur est un capteur de G (22).

3. Système de freinage pour motocyclette selon les revendications 1 ou 2, **caractérisé en ce que** le premier élément d'actionnement (18) actionne le premier mécanisme d'alimentation de pression hydraulique (40a) pour actionner le premier mécanisme de génération de force de freinage (35), et
- le deuxième élément d'actionnement (13) actionne le deuxième mécanisme d'alimentation de pression hydraulique (40b) pour actionner le deuxième mécanisme de génération de force de freinage (36).
